# EUROPEAN PATENT APPLICATION

(11) **EP 1 048 540 A1**
(43) Date of publication of application: **02.11.2000**
(21) Application number: 00201307.6
(22) Date of filing: 11.04.2000
(51) Int. Cl.: B60T 17/00, B01D 53/26

(54) **Air desiccant canister**

(30) Priority: 28.04.1999 US 131462 P; 16.11.1999 US 442205
(71) Applicant: Baldwin Filters, Inc., Kearney, NE 68848-6010 (US)
(72) Inventor: Strope, Claude F., Kearney, Nebraska 68845 (US); Biere, David A., Kearney, Nebraska 68845 (US); Brown, Gene W., Kearney, Nebraska 68845 (US)
(74) Representative: Meyers, Ernest

(57) **Abstract**

The spin-on air desiccant canister includes an outer cylindrical steel canister (22), an aluminium cast baseplate (30), and an internal desiccant bed (36) that may be held in place by an internal desiccant container (52). The baseplate (30) is adapted to connect the canister to the pneumatic circuit and includes a central outlet port (46) for return of dried air and peripheral inlet ports (48) for receiving compressed wet air. The desiccant container (52) holds molecular desiccant beads (50) for removal of the humidity from the compressed air. Baffle plates (64, 65) are located in the desiccant container and divide the desiccant bed into multiple different layers. A spring (58) compresses the baffle plates and the desiccant bed to maintain a compact desiccant bed. Some of the baffle plates (64) includes air ports (68) at their center while the other baffle plates (65) include air ports (68) at their outer radial periphery. With this arrangement, the air flow passage (70) through the desiccant bed travels radially inward and outward through consecutive layers in the desiccant bed. This increases the travel distance for air without increasing the axial length of the filter. A pressure relief valve (40) may also be connected to the baseplate (30) for exhausting excessive pressure build up in the canister.

## Description

The present invention generally relates to desiccant dryers, and more particularly to desiccant dryers particularly suited for high pressure applications such as for drying compressed wet air.

In the quest to meet safety requirements, the trucking industry turned to compressed air as the means to provide the mechanical boost demanded by the braking system. Compressed air has the ability to increase the braking forces beyond the ability of the human operator. It provides a relatively clean method of connecting and disconnecting from trailers without contaminating systems like hydraulic oils could. In addition, if the fitting or hose leaks, it leaks atmospheric quality air not hydraulic fluid that would contaminate the environment.

Several properties associated with compressed air often require attention during design of the air brake system. One problem concerns the thermodynamics of humidity, temperature and pressures. Ambient air contains an amount of water in vapor form referred to as "relative humidity". As the temperature of air increases the amount of water vapor it can hold also increases. As the pressure of air increases the ability of air to hold water vapor decreases. Thus when air is compressed without allowing an exchange of heat to occur, the air pressure and temperature increase.

During compression by a typical compressor on a truck, the temperature of the compressed air increases above ambient temperature. As this hot compressed air begins to cool in the air lines and reservoirs, the water vapor present in this air begins to condense and form liquid water. If the ambient temperature falls below freezing, this liquid water begins to freeze in the air lines, fittings and other brake components. The water also promotes corrosion, contamination formation and other maintenance problems.

Another problem that occurs is a result of the compressor through its normal operation. Crankcase oil, used for lubrication and cooling, coats the compressor liner. As the compressor piston strokes back and forth it will pull some of this oil off the wall and throw it into the air stream. Oil vapor will also leak past the piston rings, entering the air stream.

Several types of systems are in use to help reduce or eliminate the water and oil in the compressed air. One of the important developments has been the use of a desiccant bed to remove the water vapor. The general principle of operation for a desiccant bed is one of adsorption.

A desiccant bed used in the air brake industry typically comprises small round beads. Round beads are chosen due to the improved flow around a round object verses an irregular shape. These beads are specially fabricated so that there is a matrix of micro pores on the bead. Due to molecular forces, the water molecule is drawn into these pores. There is no physical dimensional change to the bead.

As high pressure high relative humidity air flows through the beads they become saturated and cannot remove more water vapor. If low pressure low relative humidity air flows through the bed it will dry the beads. The water that is present on the bead will release and go back into the air stream until there is a balance between the dryness of the beads and the dryness of the air. In order to maximize drying, the pressure of the air is reduced as much as possible. Since low pressure air has the ability to hold more water vapor than high pressure air, it in effect can dry the beads with less volume.

There are many variables that influence the water removal ability of a dryer. In the majority of dryers the desiccant bed is designed as a cylinder. It has been shown through research that increasing the ratio of the length of the cylinder to the diameter increases the efficiency if all other variables are maintained. This ratio is commonly referred to as the L/D ratio. A side-effect of increasing the L/D ratio is an increase in the pressure drop. Research has shown that above a L/D value of 10 the pressure drop of air flowing through the bed increases significantly. With both the efficiency and pressure drop factors considered it is desirable to design the desiccant bed to have a L/D ratio between 4 and 8.

However, the desired L/D ratio of the desiccant bed is not always easily designed into the space available or envelope allotted for the air desiccant canister, particularly in air brake systems. As such, prior art attempts at air desiccant filters have often failed to meet optimal or desirable L/D ratios.

Most desiccants being used in the air brake application are susceptible to oil contamination. The desiccant may become coated with any oil contained in the air. This would contaminate the micro-pore surface decreasing the drying efficiency. The oil is introduced into the air due to the action of the compressor. The compressor uses crankcase oil for lubrication and cooling and a portion of this oil is introduced into the compressed air stream.

Desiccants can also be susceptible to liquid water contamination. Most desiccants used in the air brake industry are classified as molecular sieves and work very well with vapors. When liquid water contacts the beads, they will begin to cake together forming a barrier to the air to flowing through it. As the caking progresses, the dryer becomes less efficient.

A third problem associated with desiccants is caused by abrasion. If the desiccant bed is not compacted sufficiently, the beads rub against each other during high velocity/pressure swings. This continual rubbing causes them to abrade forming a fine dust.

It is therefore the general aim of the present invention to provide a more practical spin-on desiccant canister for an air brake system and more particularly to provide a desirable L/D ratio for the desiccant bed of a desiccant canister where the allotted space or design envelope is unfavorable for the desired ratio.

In order to achieve these objectives, the invention provides an air desiccant cartridge for removing humidity from air in accordance with claim 1.

It is an advantage of the present invention that the number of baffles and layers in the desiccant bed can be selected to provide a more desirable effective length to diameter ratio in the desiccant bed.

It is a further advantage of the present invention that the baffles may be used in a variety of different types of existing desiccant canister designs with little or no design changes to the existing desiccant canister.

It is an aspect of the invention that the desiccant bed is maintained in compact relationship by application of pressure to opposing axial ends of the bed. This prevents abrasion between desiccant beads and the formation of dust. It is a further aspect that the baffles have downward sloping drainage surfaces towards their respective air ports to facilitate drainage of any liquid water or oil that may enter the desiccant bed. This minimizes "caking" of desiccant and extends the life of the desiccant canister.

Yet another aspect of the present invention is the provision of an air flow passage between the desiccant bed and the canister sidewall which allows air to flow freely from one end to the other. A separate internal desiccant container may be used which advantageously can contain a voluminous size desiccant bed that is easy to install and maintain in a compact arrangement in the canister.

Other objects and advantages of the invention will become more apparent from the following detailed description when taken in conjunction with the accompanying drawings.
Figure 1 is a cross section of a spin-on desiccant canister in accordance with a preferred embodiment of the present invention, taken through a plane skewed relative to the central axis for the canister.

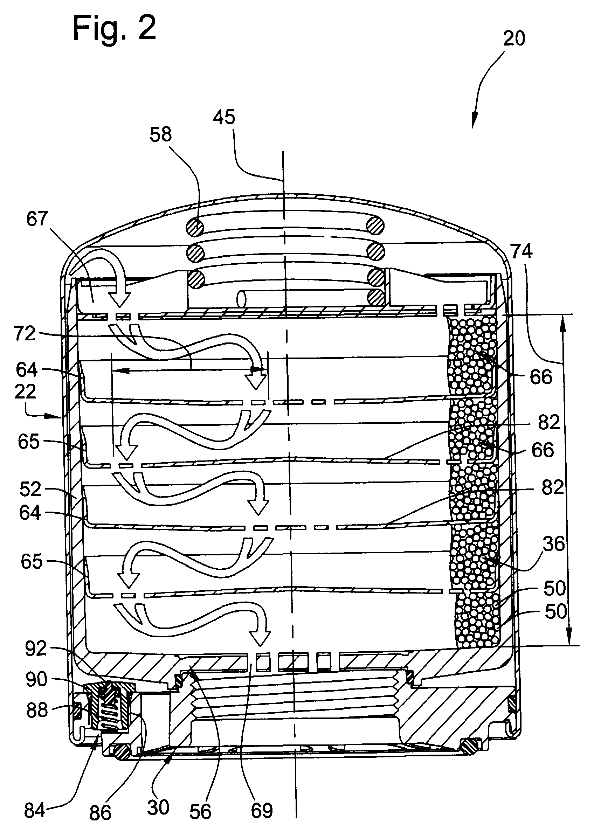

Figure 2 is a cross section of the spin-on desiccant canister shown in figure 1, but in a plane coinciding with the central axis of the canister.
Figures 3 and 4 are perspective views of baffles plates used in the desiccant canisters illustrated in Figures 1 and 2.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

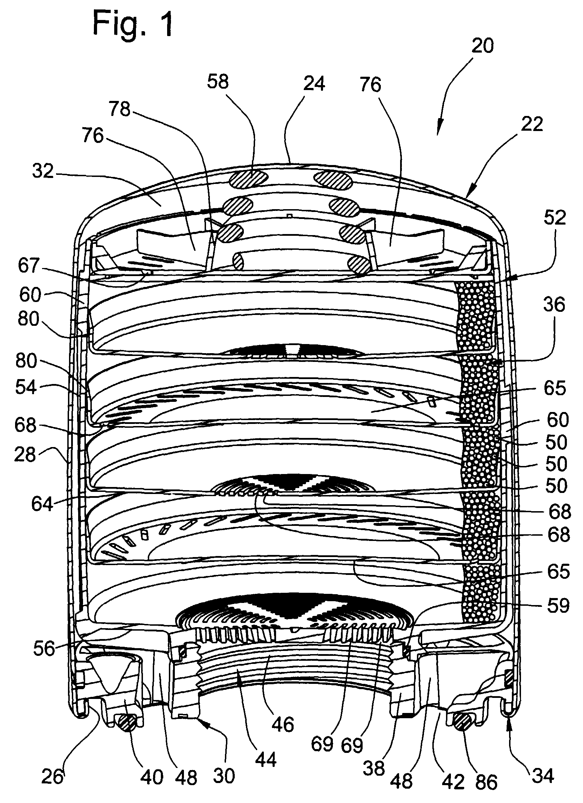

Referring to Figure 1, a desiccant cartridge in the form of a spin-on desiccant canister 20 is illustrated in accordance with a preferred embodiment of the present invention. The desiccant canister 20 includes an outer shell in the form of an outer steel canister 22, which may be deep drawn from relatively heavy gauge sheet steel. The canister 22 includes a closed end 24, an open end 26 and a generally cylindrical side wall 28. A baseplate 30 is connected to the side wall 28 at the open end 26 to enclose a drying chamber 32. To facilitate drying of air, a desiccant bed, generally indicated at 36 is disposed in the drying chamber 32.

In the preferred embodiment, the baseplate 30 is cast from aluminium and is connected to the canister by a conventional hem 34 in which the edge of the canister is folded over an outer peripheral cylindrical wall on the baseplate to form a mechanical lock. However, other conventional connections between the baseplate and canister may also be used such as the use of a separate seaming lid as illustrated in US patent no. 5,851,261, or welding (in the case of a stamped steel baseplate) or the like. The baseplate 30 generally provides for support and connection of the spin-on canister 20 to a pneumatic circuit, such as for example, that of a vehicular air braking system (not shown). The baseplate 30 includes an inner hub 38, an outer peripheral rim 40 generally concentric about the hub 38 and a plurality of support ribs 42 connecting the rim 40 and the hub 38. The hub 38 defines a threaded central opening 44 about a central axis 45 of the canister 20 upon which the canister 20 can be spun on to the mounting adapter of a pneumatic circuit (not shown). The central opening 44 also provides an outlet port 46 for return of dried or desiccated air. The baseplate 30 also includes a plurality of air inlet ports 48 between adjacent ribs 42 for receiving compressed air which is typically considered "wet" or un-dried. Occasionally flow may be reversed in which dry air is directed from the outlet port 46 through the bed 36 to the inlet ports 48 for recharge of the drying ability of the desiccant bed 36.

The desiccant bed 36 includes a suitable particulate desiccant medium such as a plurality of desiccant beads 50. In the preferred embodiment, the desiccant beads 50 are contained by an internal desiccant container 52. Because there is typically a small pressure differential across the desiccant medium, the container 52 may be formed from plastic material. The desiccant container 52 is preferably unitary as shown, but may alternatively comprise separate components. The desiccant container 52 includes a tubular or generally cylindrical side wall 54 and a flat or slightly concave base 56. The base 56 is situated against the baseplate 30 and held in contact therewith by a spring 58. An o-ring gasket 59 is located and compressed between the base 56 and the baseplate 30 to prevent mixing of compressed wet air with dried air. The side wall 54 includes locating fins 60 which project radially outward from the side wall 54 and contact the cylindrical inner surface of the canister 22 to locate the container 52 concentrically aligned with the central axis 45. The locating fins 60 also allow for air passageways 62 to be formed to allow flow of compressed wet air to the closed end 24 of the canister 20.

In accordance with the present invention, a plurality of baffles in the form of baffle plates 64, 65 divide the desiccant bed 36 into a plurality of generally disc shaped drying layers 66 with apertures or air ports 68 in the baffle plates 64, 65 arranged to increase the length of the air flow passage (schematically indicated by arrows 70) without necessarily increasing the axial length of the desiccant canister 20. In particular, the air ports 68 of adjacent baffle plates 64 are arranged at a lateral distance (indicated by arrow 72) such that air must flow laterally in a plane perpendicular to the central axis 45 before passing that drying layer 66. It is also noted that the base 56 of the container 52 includes central air ports 69 and thus operates as a baffle as well. The beads 50 may be larger in diameter than the width of the air ports 68, 69 to prevent beads from escaping from the desiccant container 52. Alternatively screens or porous dust pads may be used to prevent the escape of the beads 50. Dust pads may be located at one or both axial ends of the desiccant bed.

The present invention utilizes a substantial non-axial flow through each disk shaped layer 66 to achieve an increase in the air travel distance along the air flow passage 70. In the preferred embodiment, certain baffle plates 65 have air ports 68 located in a large diameter ring in proximity to the inner cylindrical surface of the desiccant container 52. In the other baffle plates 64, the air ports 68 are located in the approximate center around the central axis 45. With this arrangement, the air flow 70 flows along a winding path consecutively radially inward and radially outward through the drying layers 66, thereby adding lateral movement to the air.

This arrangement of air ports on the baffle plates 64, 65 advantageously increases the effective length to diameter ratio of the desiccant bed 36 without increasing the overall height of the assembly. The desiccant canister 20 achieves this by forcing the air to flow back and forth through smaller volumes of desiccant. The addition of each baffle plate 64, 65 adds another path that the air must travel.

It should be noted for a given application with predetermined physical envelope (space allotted for the desiccant canister), the "effective" length to diameter ratio is determined by selecting or changing the number of baffle plates 64, 65 and the desiccant volume between baffle plates 64, 65. As such the desiccant bed can easily be divided into two, three, four or more individual drying layers 66 or volumes. With the baffle plates 64, 65, the actual axial length 74 of the desiccant bed 36 is less than the effective length of the air flow passage 70 through the desiccant bed 36. In the preferred application of use in air brake and compressor systems for vehicles, it is thus easy to design the desiccant bed 36 to have en "effective" length to diameter ratio between the desirable range of between about 4 and 8, regardless of the available envelope for the desiccant canister 20 afforded by vehicle designers.

Pressure is applied against the entire upper and lower surface of the bed 36 to maintain a compact relationship of beads 50 in the bed 36. Plates can shift to an extent to maintain compaction over the life of the desiccant canister 20. To accomplish bed compaction in the preferred embodiment a spring 58 is utilized. The top baffle plate 67 includes integrally formed radial support fins 76 for limiting the amount of bending capable in the top baffle plate 64. The top baffle plate 67 also includes a spring chamber 78 for receiving the spring 58. The spring 58 urges the desiccant bed towards the container base 56. Because the baffle plates 64, 65 are slidably positioned in the container 52, the spring 58 maintains the beads 50 of the desiccant bed in a compact relationship. As such, it is an advantage that the beads 50 of the desiccant bead are maintained in a compact relationship with each other thereby avoiding motion of beads relative to one another which could otherwise undesirably produce dust or deteriorate the bed.

The baffle plates 64, 65 may also include an outer peripheral cylindrical resilient wall 80 which engages the inside cylindrical surface of the desiccant container 52 to form a radial seal and thereby advantageously minimize the amount of air that avoids the winding path through the desiccant beads 50.

It is another aspect of the present invention that the baffle plates 64, 65 each have a downward sloping drainage surface 82 towards their respective air ports 68. As shown in the figures, the plates are either concave or convex to achieve the downward sloping drainage surface 82. It is an advantage that the drainage surfaces 82 allow any liquid to drain towards the apertures or air ports 68 through gravity. Liquid would drain from one layer downward to the next layer until it eventually drains out of the desiccant container 52.

Another optional feature is the provision of a safety pressure relief valve 84 for venting excessive pressure build up in the canister 20 or associated air brake system. The relief valve 84 can relieve the pressure in the canister in a blocked filter condition preventing pressure buildup which might rupture the canister. The relief valve 84 is mounted in the baseplate 30 and is operable to connect the inside of the filter to the external atmosphere under dangerous operating conditions. The relief valve 84 may be located just radially outside of the inlet ports 48, and between the outer ring gasket 86 and hemmed connection 34 between the baseplate 30 and the canister 22. With this arrangement, the relief valve 84 is also advantageously in a highly protected location. In particular, in some applications such as in air brake systems for vehicles, snow and ice can cause problems in plugging air passageways, valves and lines in the system. By locating the relief valve in the baseplate 30, the relief valve 84 is subject to reduced exposure to external elements such as snow and ice. In the preferred embodiment, a mounting aperture 86 is provided in the baseplate 30 that is in fluid communication with the external atmosphere. The aperture 86 may be threaded to threadingly mount the relief valve 84. The relief valve 84 includes a compression spring 88, a valve body 90 and a valve plunger 92. The valve body 90 includes an inlet opening that is normally filled by the valve plunger 92. However, during excessive pressure build up in the canister 20 or air brake system, the pressure overcomes the force of the spring 88 to allow air to pass through the outlet aperture.

It will also be appreciated that a coalescer and a dust pad may also be used in the desiccant canister 20 for removal of oil or other liquid and desiccant particulate dust. A coalescer can be located between the inlet ports and the desiccant bed such as between the container and either the base plate or canister. The dust pad can be located between the desiccant bed and the outlet ports in the container base.

Although the preferred embodiment has central outlet and peripheral inlet, port arrangement can be reversed, if desired, to provide central inlet and peripheral outlet, requiring changes in relief valve or coalescer, as will be apparent to one skilled in the art.

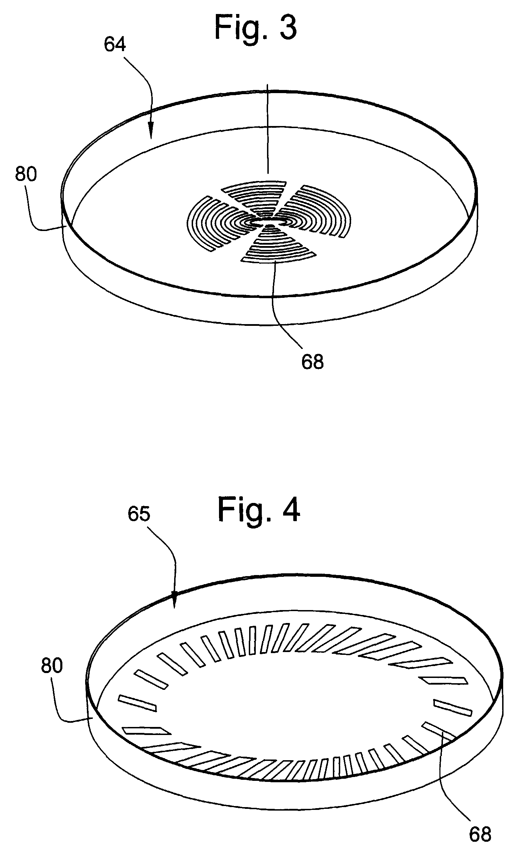

The present invention also is directed towards a novel method of manufacturing a desiccant canister designed to fit the predetermined envelope of an air brake system for a vehicle and establishing a length to diameter ratio for the desiccant bed 36 therein. The method first includes providing a housing having a size which fits the given envelope. The housing generally houses the desiccant bed separating it from the external atmosphere and comprises the baseplate 30 and the canister 28. In single or dual pass designs, the size of the housing also determines the maximum size for the desiccant bed 36 and establishes the maximum actual length to diameter ratio for the desiccant bed 36. As indicated, the actual length to diameter ratio can often be unfavorable in many applications of desiccant canisters. The method also includes dividing desiccant bed 36 into layers 66 with baffle plates 64, 65, 67 (and base 56 which acts as a baffle as well). The baffles include non aligned air ports 68 which cause the air flow passage through each layer to have a substantial non-axial component. The number of baffles is selected to provide a more desirable effective length to diameter ratio of the desiccant bed that increases the length of the air passage through the desiccant bed 36. The method may also comprise compacting the desiccant bed 36 by applying force to the ends of the bed, containing the desiccant bed 36 with an internal desiccant container 52, and sealing different layers along the contact surface between the baffles and the internal container. It should be noted that in the preferred embodiment only those baffle plates 64 with inner air ports 68 such as that shown in figure 3 need the radial seal to prevent air from bypassing the inner air ports 68.

Although a preferred embodiment has been shown and has several advantages as disclosed above, this invention is intended to also cover applications were the air enters the desiccant bed from the edges and any other embodiment utilizing multiple layers of desiccant separated by baffle plates. For example, an alternative air flow arrangement through the desiccant drying layers may be to have apertures or air ports arranged on opposite sides or only on opposing halves of the baffle plates such that air flow includes a non-axial lateral vector through the layers. Another alternative of the invention is to provide a multi-layered desiccant bed that dries the air as the air moves from the inlet ports 48 to the closed end 24 and then provide a dedicated conduit to return dried air to the outlet port 46. The inlet and outlet ports in the baseplate can also be reversed to meet other requirements of external equipment, such as when there is a central inlet port and peripheral outlet ports in the baseplate. A further alternative is to use a single canister without the internal desiccant container, with the beads and baffles sized to the outer canister. Instead of using a hemmed connection between baseplate and canister, a seaming lid may also be used to connect the baseplate and the canister as is previously indicated. These alternatives are intended to be covered by certain of the broader claims appended hereto.

## Claims

1. An air desiccant cartridge for removing humidity from air, the cartridge comprising:
an outer shell (22) having an open end (26), closed end (24) and a tubular side wall (28) therebetween, the tubular side wall (28) having a central axis;
a baseplate (30) connected to the open end (26) of the outer shell (22), the baseplate (30) defining an inlet port (48) for inletting humid air and an outlet port (46) for outletting dry air;
a desiccant bed (36) disposed in the outer shell (22) between the baseplate (30) and the closed end (24), the desiccant bed (36) having an axial length along the central axis, the desiccant bed (36) adapted to receive and discharge air at its respective opposed axial ends, the axial end proximate the closed end (24) fluidically communicating with the baseplate (30) along a first air passage (70) through the desiccant bed (36) and a second air passage bypassing the desiccant bed (36);
characterized by at least two axially spaced baffles (64, 65) dividing the desiccant bed into at least two different generally disc shaped layers between the closed end (24) and the baseplate (30), axially adjacent baffles including non aligned air ports (68) so that air flow through a given layer has a substantial non-axial component and such that the first air passage (70) has a length greater than the axial length of the desiccant bed.

2. Air desiccant cartridge in accordance with claim 1, characterized by a desiccant container (52) disposed within the outer shell (22), having a base (56) and a tubular side wall (54) extending axially therefrom, the base (56) including at least one air port (48) for facilitating flow therethrough, the desiccant container (52) having air entrance and exit ends fluidically connected to the inlet port (48) and the outlet port (46), respectively, the baffles (64, 65) being slidably located in desiccant container (52).

3. Air desiccant cartridge in accordance with claim 2, characterized in that some of the baffle plates (64, 65) include an outer peripheral annular wall (80), the outer peripheral annular walls (80) being resilient and urged radially outward against the inner surface of the side wall (54) of the desiccant container (52) to form a radial seal.

4. Air desiccant cartridge in accordance with any of claims 1, 2 or 3, characterized by a pressure relief valve (84) mounted in the outer peripheral rim (40) of the baseplate (30) for relieving excessive pressure inside the cartridge (52) to the external atmosphere.

5. Air desiccant cartridge in accordance with any of claims 1 to 4, characterized in that at least one of the baffle plates (64) includes inner air ports (68) in proximity to the central axis and at least one of the baffle plates (65) includes outer air ports (68) located at a radial distance from the central axis in proximity to the outer radial periphery of the desiccant bed (36), wherein air is adapted to flow radially inward and outward through adjacent layers in the desiccant bed (36).

6. Air desiccant cartridge in accordance with any of claims 1 to 5, characterized in that each baffle plate (64) with inner air ports (68) is concave and each baffle plate (65) with outer air ports (68) is convex, wherein the arrangement of concave and convex baffle plates facilitates drainage of liquid water.

7. Air desiccant cartridge in accordance with any of claims 1 to 6, characterized by a spring (58) urging the baffles (64, 65) against one another to maintain the beds in a compact arrangement.

8. Air desiccant cartridge in accordance with any of claims 2 to 7, characterized in that the base of the desiccant container (52) includes a plurality of exit ports (69) aligned with the outlet port (56), wherein air is adapted to flow axially in one direction through the inlet ports (48) between the inner and outer shells to the closed end (24) of the outer shell (22) and then axially in the other direction through the desiccant medium to the outlet port (46).

9. Air desiccant cartridge in accordance with any of claims 2 to 8, characterized in that the desiccant container (52) includes outward projecting fins (60) locating desiccant container (52) inside the canister, the air flow passageway (62) being located between the fins.

10. A method for manufacturing a spin on desiccant canister to meet a predetermined sized envelope provided by an air brake system of a vehicle while establishing a more desirable effective length to diameter ratio of a desiccant bed in the desiccant canister, comprising:
providing an outer housing (22) designed to fit the envelope, the housing (22) comprising a baseplate (30) and a shell housing the desiccant bed (36) therein, the baseplate (30) adapted to connect to the air brake system about a central axis and including an inlet port (48) and an outlet port (46) for receiving humid air and returning dry air;
dividing the desiccant bed (36) into multiple layers using at least two different types of baffles (64, 65) each different type of baffle (64, 65) including non aligned air ports (68) so that air flow through a given layer has a substantial non-axial component;
selecting the number of baffles to establish a more desirable effective length to diameter ratio for the desiccant bed.

11. A method in accordance with claim 10, characterized in that the desiccant bed (36) comprises a particulate desiccant medium and the baffles are axially movable relative to each other, further comprising:
compacting the desiccant bed by opposing force to opposing ends of the desiccant bed.

12. A method in accordance with any of claims 10 or 11, further comprising:
containing the desiccant bed (36) and baffles (64, 65) in a desiccant container (52) positioned in the outer housing.

13. A method in accordance with claim 12 further comprising:
sealing the contact surface between the desiccant container (52) and the baffles (64, 65).
